# EUROPÄISCHE PATENTSCHRIFT

(11) **EP 2 514 023 B1**
(45) Veröffentlichungstag und Bekanntmachung des Hinweises auf die Patenterteilung: **14.08.2013**
(21) Anmeldenummer: 10771439.6
(22) Anmeldetag: 28.10.2010
(51) Int. Cl.: H01M 10/42, B01D 53/26, H01M 2/12, H01M 10/0525, H01M 10/50

(54) **VERFAHREN UND VORRICHTUNG ZUR MINDERUNG DER FEUCHTIGKEIT EINES GASES IN EINEM BATTERIEGEHÄUSEINNENRAUM**
METHOD AND DEVICE FOR REDUCING THE HUMIDITY OF A GAS IN A BATTERY HOUSING INTERIOR
PROCÉDÉ ET DISPOSITIF DE RÉDUCTION DE L'HUMIDITÉ D'UN GAZ À L'INTÉRIEUR D'UN BOÎTIER DE BATTERIE

(30) Priorität: 18.12.2009 DE 102009054921
(43) Veröffentlichungstag der Anmeldung: 24.10.2012
(73) Patentinhaber: Samsung SDI Co., Ltd., Gyeonggi-do (KR); Robert Bosch GmbH, 70442 Stuttgart (DE)
(72) Erfinder: REITZLE, Alexander, 89231 Neu-Ulm (DE); ZIMMERMANN, Ulrich, 74394 Hessigheim (DE)
(74) Vertreter: Bee, Joachim
(86) Internationale Anmeldenummer: PCT/EP2010/066319
(87) Internationale Veröffentlichungsnummer: WO 2011/072936

(56) Entgegenhaltungen:
- EP-A1- 1 048 339
- US-A- 5 261 946
- US-A- 5 401 300

## Beschreibung

Die vorliegende Erfindung betrifft ein Verfahren sowie eine Vorrichtung zur Minderung der Feuchtigkeit eines Gases in einem Batteriegehäuseinnenraum.

Das Verfahren sowie die Vorrichtung sind zur Minderung der Feuchtigkeit von Gehäuseinnenräumen, in denen Batteriezellen bzw. Batterien angeordnet sind, zu verwenden. Batteriezellen sowie aus Batteriezellen zusammengesetzte Batterien bilden bekannterweise einen oder mehrere Akkumulatoren aus, die elektrisch ladbar und wieder entladbar sind. Eine Batteriezelle ist dabei eine einzelne galvanische Zelle, die je nach Kombination der Materialien der Elektroden der Zelle eine charakteristische Spannung liefert. Die Batteriezellen können miteinander in Reihe oder parallel geschaltet eine Batterie ausbilden.

### Stand der Technik

Insbesondere Lithium-Ionen-Batterien werden in letzter Zeit verstärkt in Mobilfunkgeräten, Laptops und anderen tragbaren, elektronischen Geräten eingesetzt. Außerdem nimmt die Anwendung von Lithium-Ionen-Batterien als Energiespeicher in elektrisch anzutreibenden Kraftfahrzeugen immer mehr zu. Zur Gewährung einer ausreichenden Betriebssicherheit sowie Leistungsbereitstellung sind die Lithium-Ionen-Batterien dabei in einem optimalen Temperaturbereich zu betreiben, weshalb in der unmittelbaren Umgebung der Batterien oftmals ein oder mehrere Kühlsysteme zur Kühlung der Batterien angeordnet sind. Diese Kühlsysteme sind üblicherweise ebenfalls in einem die Batterien bzw. Batteriezellen umschließenden Gehäuse angeordnet. Das Gehäuse übernimmt die Funktion der Befestigung, des Schutzes der Abdichtung gegen die Umwelt und der elektrischen Isolation der Batterien. Im Batteriegehäuse sind außerdem für gewöhnlich neben den Batteriemodulen und dem als Thermomanagementsystem ausgestaltetem Kühlsystem Leistungselektronik sowie elektrische Leitungen zur Steuerung der Batterien beim Lade- und Entladevorgang angeordnet. Auf Grund der Größe eines Batteriegehäuses ist eine Einrichtung zum Ausgleichen des Druckes erforderlich, da ansonsten zu starke Belastungen bei Druckunterschieden auftreten können.

In Gehäusen mit eingeschlossenem Luftvolumen, welche Temperatur- und/oder Volumenänderungen ausgesetzt sind, werden als Druckausgleichselemente bisweilen Membranen eingesetzt, die aus Teflon bestehen oder zumindest Teflon aufweisen. Eine derartige Membran hält zwar Flüssigkeiten wie z. B. Wasser ab, ist jedoch für Wasserdampf durchlässig. Bei feuchter Außenatmosphäre kann demzufolge feuchte Luft in das Gehäuse eindringen. Bei gekühlten Bereichen innerhalb des Gehäuses, wie z. B. Kühleinrichtungen als Thermomanagementsysteme zur Einstellung einer optimalen Batteriebetriebstemperatur, kann es demzufolge zur Kondensation der Luftfeuchtigkeit innerhalb des Gehäuses kommen. Das bei der Kondensation anfallende Kondenswasser kann zu Kurzschlüssen an im Gehäuse aufgenommener Elektronik und/oder zu Korrosion von Bauteilen führen.

US 5261946 offenbart ein Verfahren und eine Vorrichtung zur Verminderung der Feuchtigkeit von Druckluft.

### Offenbarung der Erfindung

Erfindungsgemäß wird ein Verfahren zur Minderung der Feuchtigkeit eines Gases in einem Batteriegehäuseinnenraum, zur Verfügung gestellt, bei dem ein Gas durch eine erste selektiv permeable Membran in einen Zwischenraum geleitet wird, der als einen Einlass die erste selektiv-permeable Membran und als einen Auslass eine zweite selektiv- permeable Membran aufweist, und das Gas danach mittels einer Kühleinrichtung im Zwischenraum derart gekühlt wird, dass ein Wasserdampfanteil des Gases zu Wasser kondensiert wird und das Gas mit vermindertem Wasserdampfgehalt durch die zweite selektiv-permeable Membran in den Gehäuseinnenraum geleitet wird. Derartige verwendete selektiv-permeable Membranen können auch als semipermeable Membranen bezeichnet werden, die für Gas durchlässig sind und für Flüssigkeiten undurchlässig. Der durch die Membranen abgegrenzte Zwischenraum ist ansonsten im Wesentlichen, bis auf eine ggf. angeordnete Abflussleitung, gas- und flüssigkeitsdicht ausgeführt.

Dabei ist das Gas, welches vor Einfüllung des Gases mit verringertem Wasserdampfanteil im Gehäuse aufgenommen ist, üblicherweise Luft. Das erfindungsgemäße Verfahren ist nicht auf die Ein- und Ausleitung von reinen Gasen beschränkt, sondern im Sinne der Erfindung sind unter Gasen auch Gasgemische zu verstehen.

Das bei der Kondensation entstehende Kondenswasser wird aus dem Zwischenraum zwischen den Membranen abgeleitet. Das Verfahren eignet sich insbesondere zur Trocknung von Außenluft und Einleitung der getrockneten Außenluft durch die zweite Membran in das Gehäuse. Durch Einleitung des getrockneten Gases in das Gehäuse wird das im Gehäuse vorher befindliche Gas entweder mit dem getrocknetem Gas vermischt oder durch das getrocknete Gas verdrängt, sodass das nunmehr im Ergebnis im Gehäuse befindliche Gas einen geringeren Wasserdampfanteil aufweist als das Gas, welches ursprünglich im Gehäuse aufgenommen war.

Der Vorteil des erfindungsgemäßen Verfahrens besteht insbesondere darin, dass durch die erste selektiv-permeable Membran Außenluft mit bestimmtem Wasserdampfanteil in den Zwischenraum zwischen die Membranen gelangen kann und durch die zweite Membran zunächst an einer Einströmung in den Gehäuseinnenraum gehindert wird. Der durch die beiden Membranen und die im Wesentlichen undurchlässigen Wände des Zwischenraumes definierte Raum, in dem sich die Kühleinrichtung befindet, wird aufgrund der Wasserabscheidung mit einem Gas mit im Vergleich zur Außenluft geringeren Wasserdampfanteil ausgefüllt. Nur dieses feuchtigkeitsgeminderte Gas kann durch die zweite Membran in den Gehäuseinnenraum gelangen. Die zweite Membran dichtet den Gehäuseinnenraum außerdem gegen das angefallene Kondenswasser ab. Im Ergebnis wird somit relativ trockenes Gas in das Gehäuse eingeleitet und die Einleitung von Flüssigkeit und/oder Wasserdampf in das Gehäuse vermieden. Das Verfahren kann zur Minderung der Feuchtigkeit insbesondere in Batteriegehäusen genutzt werden, in denen gekühlte Lithium-Ionen-Akkumulatoren angeordnet sind, die als Energiequelle zu Antriebszwecken dienen.

Das Verfahren wird dann durchgeführt, wenn ein Druckausgleich zwischen einem erhöhten Umgebungsluftdruck und einem im Vergleich zum Umgebungsluftdruck niedrigeren Gehäuseinnenraumdruck erforderlich ist, wobei zwecks Druckausgleich von der Kühleinrichtung getrocknetes Gas in das Gehäuse eingeleitet wird. Das heißt, dass das erfindungsgemäße Verfahren nicht nur zur Feuchtigkeitsminimierung im Gehäuse eingesetzt wird, sondern auch zur Realisierung eines Druckausgleiches, bei dem ein am Gehäuse vorgesehenes Druckausgleichsventil geöffnet wird und das von der Kühlreinrichtung erzeugte trockene Gas in das Gehäuse eingeleitet wird. Zu diesem Zweck kann nach der ersten Membran in Gasströmungsrichtung ein Regelventil angeordnet sein, welches bei notwendigem Druckausgleich die Strömung des getrockneten Gases in den Gehäuseinnenraum regelt.

Zur Erreichung einer optimalen Trockenheit im Gehäuseinnenraum und effizienter Verfahrensdurchführung ist vorgesehen, dass die Kühlleistung der Kühleinrichtung entsprechend der Feuchtigkeit des durch die erste selektiv-permeable Membran geleiteten oder zu leitenden Gases und/oder eines Druckunterschiedes zwischen Gehäuseinnenraum und Umgebung gesteuert oder geregelt wird.

Es wird außerdem erfindungsgemäß eine Vorrichtung zur Minderung der Feuchtigkeit eines Gases in einem Batteriegehäuseinnenraum, zur Verfügung gestellt, welche einen Zwischenraum umfasst, der als einen Einlass eine erste selektiv-permeable Membran und als einen Auslass eine zweite selektiv-permeable Membran aufweist, und in dem zwischen den Membranen eine Kühleinrichtung angeordnet ist, mittels derer Umgebungsluft derart abkühlbar ist, dass Wasser als Kondensflüssigkeit und Gas mit verringertem Wasserdampfanteil erzeugbar ist, wobei die erste und die zweite selektiv-permeable Membran jeweils für Gase durchlässig und zumindest die zweite selektiv-permeable Membran für Flüssigkeiten, insbesondere Wasser, undurchlässig ist. Es ist dabei bevorzugt vorgesehen, dass auch die erste selektiv-permeable Membran für Flüssigkeiten undurchlässig ist. Die erfindungsgemäße Vorrichtung kann dabei derart ausgestaltet sein, dass sie das Gehäuse umfasst oder alternativ, dass sie lediglich an ein bestehendes Gehäuse, insbesondere an ein Batteriegehäuse, anschließbar ist. Die Vorrichtung kann dabei auch ein Druckausgleichsventil umfassen, welches in Richtung eines in den Gehäuseinnenraum einströmenden Gases vor der ersten, zwischen der ersten und der zweiten oder nach der zweiten selektiv permeablen Membran angeordnet sein kann. Die Einleitung von getrocknetem Gas in den Gehäuseinnenraum erfolgt somit nur dann, wenn ein Druckausgleich vorgenommen wird, insbesondere bei unterschiedlichen Temperatur- und/oder Druckverhältnissen innerhalb und außerhalb des Gehäuses.

Die Kühleinrichtung ist derart angeordnet, dass sie sich in Gasströmungsrichtung zwischen den Membranen befindet, wobei die Kühleinrichtung nicht unbedingt im Projektionsbereich einer oder beider Membranen anzuordnen ist, sondern es ausreicht, wenn ein durch die erste Membran in den Zwischenraum geleitetes Gas mit der Kühleinrichtung in Kontakt kommt und durch die zweite Membran in den Gehäuseinnenraum entweichen kann.

Durch die erfindungsgemäße Vorrichtung wird erreicht, dass ein in den Gehäuseinnenraum strömendes Gas, wie z. B. Umgebungsluft, vor Eintritt in das Gehäuse derart abgekühlt wird, dass der Wasserdampfanteil des Gases als Kondenswasser abgeschieden wird und das Gas mit verringertem Wasserdampfgehalt in den Gehäuseinnenraum geleitet wird, sodass die Feuchtigkeit im Gehäuseinnenraum maßgeblich verringert wird. Das entstandene Kondenswasser wird durch die zweite selektiv-permeable Membran am Eintritt in den Gehäuseinnenraum gehindert. Dabei wird im Wesentlichen nur das Gas getrocknet, welches sich zwischen den beiden Membranen befindet, da die erste Membran einen Volumenstrom außerhalb des Gehäuses befindlichen Gases in den gasgefüllten Zwischenraum stark verringert, wodurch die Vorrichtung sehr effizient betreibbar ist.

Es ist dabei bevorzugt vorgesehen, dass wenigstens eine der Membranen als Filtermaterial Polytetrafluroethylen umfasst. Eine derartige Membran ist auch unter dem Namen Gore-Tex bekannt, wobei diese Membran feine Poren besitzt, die groß genug sind um Gas, welches ggf. auch einen Wasserdampfanteil hat, durchzulassen, jedoch für Wasser undurchlässig ist. In alternativer Ausgestaltung können die Membranen auch anderes Filtermaterial als Polytetrafluroethylen umfassen, wie z. B. andere Kunststoffe oder Keramik oder auch feinmaschiges Metallgitter, wobei die Membranen derart auszugestalten sind, dass sie als für Gase in eine Richtung für Gase durchlässige Filter wirken.

Die Vorrichtung ist insbesondere dann vorteilhaft ausgestaltet, wenn ihre Kühleinrichtung wenigstens ein Peltier-Element umfasst oder durch ein Peltier-Element ausgebildet ist. Durch die Leitung von Strom durch ein Peltier-Element lässt sich eine Abkühlung des Peltier-Elementes erreichen. Dieses Peltier-Element kann dabei derart angeordnet sein, dass es einseitig in eine Wand des Zwischenraums so tief eingelassen ist, dass die bei Betrieb des Peltier-Elementes generierte Wärme an die Umgebung abgeführt wird und somit nicht die Abkühlung des Gases im Zwischenraum negativ beeinflusst. Bei Verwendung des Peltier-Elementes ist es somit lediglich notwendig, das Peltier-Element in beschriebener Art und Weise anzuordnen und einen Strom durch das Peltier-Element zu leiten, wodurch sich die Oberfläche des Peltier-Elementes abkühlt und zur genannten Kondensation führt.

In weiterer vorteilhafter Ausgestaltung der Vorrichtung ist vorgesehen, dass am Zwischenraum zwischen den Membranen wenigstens eine Ablaufleitung zur Ableitung des bei der Kühlung entstandenen Kondenswassers angeordnet ist. Diese Ablaufleitung führt das Kondensat an die Umgebung ab, um ein Ansammeln des Kondensats im Zwischenraum zu verhindern.

In weiterer Ausgestaltung kann vorgesehen sein, dass in der Ablaufleitung ein Rückschlagventil angeordnet ist, mit welchem ein Rückfluss von in der Ablaufleitung befindlicher Flüssigkeit in den Zwischenraum vermeidbar ist. Dadurch wird sicher gestellt, dass das Kondenswasser nicht in den Zwischenraum zurückströmen kann.

Zur Realisierung einer kostengünstigen Vorrichtung und insbesondere Kühleinrichtung ist vorgesehen, dass die Kühleinrichtung ein Bypass eines Kühlsystems zur Kühlung einer Batterie im Gehäuseinnenraum ist. Bei bevorzugter Verwendung der erfindungsgemäßen Vorrichtung zur Trocknung der Luft in einem Batteriegehäuseinnenraum, in dem mittels eines Kühlsystems gekühlte Batterien angeordnet sind, kann ein Strang bzw. eine Abzweigung des Batterie-Kühlsystems in den Zwischenraum gelegt sein, die die beschriebene Abkühlung des Gases mit der damit verbundenen Kondenswasserbildung realisiert. Es ist somit die Anordnung einer extra Kühleinrichtung im Zwischenraum vermeidbar. Diese Ausgestaltung bietet sich insbesondere bei Anwendung einer Aktiv-Flüssigkühlung der Batterien im Gehäuse an.

Zur Steuerung bzw. zur Regelung der Kühlleistung der Kühleinrichtung entsprechend der Feuchtigkeit des durch die erste selektiv-permeable Membran geleiteten oder zu leitenden Gases und/oder eines Druckunterschiedes zwischen dem Gehäuseinnenraum und der Umgebung ist eine Steuer- und Regelungseinheit vorgesehen, die ggf. ähnlich wie die Kühleinrichtung ein Bestandteil einer gesamten, zur Steuerung der Batterie eingesetzten Regel- und Steuerungseinheit sein kann.

Zur weiteren Verringerung der Feuchtigkeit im Gehäuseinnenraum kann vorgesehen sein, dass im Gehäuseinnenraum und / oder im Zwischenraum zur Absorption von Feuchtigkeit ein Trockenmittel angeordnet ist. Dieses Trockenmittel kann z. B. Silikon sein.

Es wird somit erfindungsgemäß ein Verfahren und eine Vorrichtung zur Verfügung gestellt, mittels derer in einfacher und zuverlässiger Weise die Feuchtigkeit eines im Gehäuseinnenraum aufgenommenen Gases bei Druckausgleich unter einem kritischen Wert gehalten werden kann.

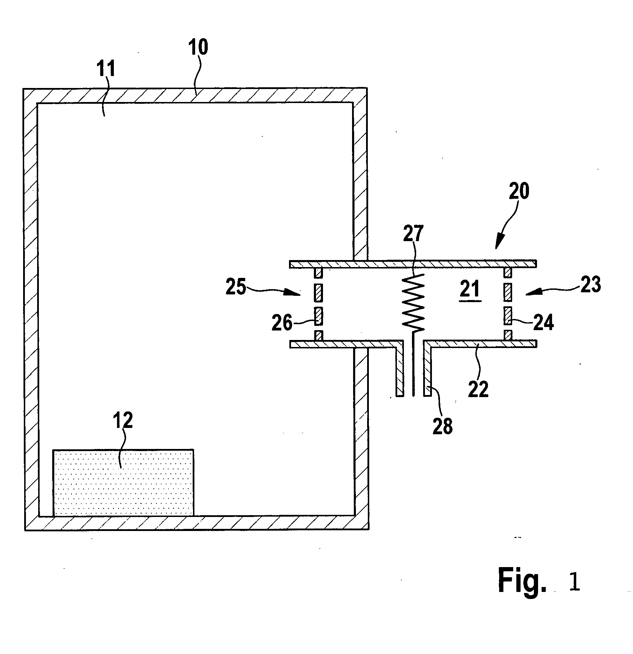

Die vorliegende Erfindung wird anhand der beiliegenden Zeichnung beschrieben.

Es zeigt dabei die einzige Figur eine an ein Gehäuse 10 angeschlossene erfindungsgemäße Vorrichtung 20 zur Minderung der Feuchtigkeit.

Das Gehäuse 10 schließt einen Gehäuseinnenraum 11 ein, an den die Vorrichtung 20 zur Minderung der Feuchtigkeit angeschlossen ist. Diese Vorrichtung 20 umfasst einen Zwischenraum 21, der durch Zwischenraumwände 22 sowie durch eine einen Einlass 23 darstellende erste Membran 24 und eine durch einen Auslass 25 darstellende zweite Membran 26 abgegrenzt ist. Im Zwischenraum 21 befindet sich eine Kühleinrichtung 27. Eine Zwischenraumwand 22 ist durch eine Ablaufleitung 28 unterbrochen.

Es ist ersichtlich, dass die erste Membran 24 an Umgebungsluft grenzt, wobei die erste Membran 24 aufgrund ihrer selektiven Permeabilität Gas, und demzufolge die Außenluft, in den Zwischenraum 21 gelangen lässt, ihn jedoch vor Flüssigkeiten abdichtet. Durch den Betrieb der Kühleinrichtung 27 wird das im Zwischenraum 21 nunmehr aufgenommene Gas derart abgekühlt, dass Wasserdampfanteile des Gases zu Wasser kondensieren, wobei dieses Kondenswasser durch die Ablaufleitung 28 an die Umgebung abgeleitet wird. Zur Abführung des Kondenswassers und zur Abdichtung gegenüber der Atmosphäre kann in der Ablaufleitung 28 ein nicht dargestelltes Rückschlagventil angeordnet sein.

Das im Zwischenraum 21 befindliche Gas mit verringertem Wasserdampfgehalt kann durch den Auslass 25, der durch die zweite selektiv permeable Membran 26 gebildet ist, in den Gehäuseinnenraum 11 strömen. Dadurch, dass die zweite Membran 26 ebenfalls eine Membran ist, die für Gase durchlässig und für Flüssigkeiten undurchlässig ist, wird gewährleistet, dass im Zwischenraum 21 angefallenes Kondenswasser nicht in den Gehäuseinnenraum 11 gelangen kann. Am Zwischenraum 21 kann außerdem ein nicht dargestelltes Druckausgleichsventil angeordnet sein, welches bewirkt, dass bei Druckunterschieden zwischen dem Gehäuseinnenraum und der Umgebung das getrocknete Gas aus dem Zwischenraum 21 in den Gehäuseinnenraum 11 gelangt.

Bei Betrieb der Kühleinrichtung wird somit ausschließlich im Wasserdampfgehalt vermindertes Gas in den Gehäuseinnenraum 11 geleitet, wodurch das im Gehäuseinnenraum befindliche Gas einen geringen Feuchtigkeitsgehalt aufweist, sodass die Generierung von Kondenswasser im Gehäuseinnenraum und/oder Korrosion vermieden wird.

Zur weiteren Minderung von Feuchtigkeit im Gehäuseinnenraum kann wie dargestellt Trockenpulver 12 verwendet werden.

Die Ablaufleitung 28 kann neben der Ableitung von Kondenswasser auch zur Führung von elektrischen Leitungen zur Kühleinrichtung 27, die bevorzugt als Peltier-Element ausgestaltet ist, dienen.

Dabei ist die vorliegende Erfindung nicht auf die Anordnung eines Peltier-Elementes als Kühleinrichtung 27 eingegrenzt, sondern es kann auch vorgesehen sein, dass die Kühleinrichtung 27 ein Abzweig bzw. ein Bestandteil eines im Gehäuseinnenraum 11 angeordneten und nicht dargestellten Kühlsystems zur Kühlung der Batteriezellen ist.

## Patentansprüche

1. Verfahren zur Minderung der Feuchtigkeit eines Gases in einem Batteriegehäuseinnenraum, bei dem ein Gas durch eine erste selektiv permeable Membran (24) in einen Zwischenraum (21) geleitet wird, der als einen Einlass (23) die erste selektiv permeable Membran (24) und als einen Auslass (25) eine zweite selektiv permeable Membran (26) aufweist, und das Gas danach mittels einer Kühleinrichtung (27) im Zwischenraum (21) derart gekühlt wird, dass ein Wasserdampfanteil des Gases zu Wasser kondensiert wird und das Gas mit verminderten Wasserdampfgehalt durch die zweite selektiv permeable Membran (26) in den Batteriegehäuseinnenraum (11) geleitet wird, **dadurch gekennzeichnet, dass** das Verfahren durchgeführt wird, wenn ein Druckausgleich zwischen einem erhöhtem Umgebungsluftdruck und einem im Vergleich zum Umgebungsluftdruck niedrigeren Batteriegegehäuseinnenraumdruck erforderlich ist, wobei zwecks Druckausgleich von der Kühleinrichtung (27) getrocknetes Gas in das Gehäuse (10) eingeleitet wird.

2. Verfahren zur Minderung der Feuchtigkeit eines Gases in einem Batteriegehäuseinnenraum (11) nach Anspruch 1, **dadurch gekennzeichnet, dass** die Kühlleistung der Kühleinrichtung (27) entsprechend der Feuchtigkeit des durch die erste selektiv permeable Membran (24) geleiteten oder zu leitenden Gases und / oder eines Druckunterschiedes zwischen Batteriegehäuseinnenraum (11) und Umgebung gesteuert oder geregelt wird.

3. Vorrichtung (20) zur Minderung der Feuchtigkeit eines Gases in einem Batteriegehäuseinnenraum , **dadurch gekennzeichnet, dass** die Vorrichtung (20) einen Zwischenraum (21) umfasst, der als einen Einlass (23) eine erste selektiv permeable Membran (24) und als einen Auslass (25) eine zweite selektiv permeable Membran (26) aufweist, und in dem zwischen den Membranen (24, 26) eine Kühleinrichtung (27) angeordnet ist, mittels derer Umgebungsluft derart abkühlbar ist, dass Wasser als Kondensflüssigkeit und Gas mit verringertem Wasserdampfanteil erzeugbar ist, wobei die erste (24) und die zweite selektiv permeable Membran (26) jeweils für Gase durchlässig und zumindest die zweite selektiv permeable Membran (26) für Flüssigkeiten, insbesondere Wasser, undurchlässig ist, **dadurch gekennzeichnet, dass** die Vorrichtung (20) eine Steuer- und Regelungseinheit aufweist, mit der die Kühlleistung der Kühleinrichtung (27) entsprechend eines Druckunterschiedes zwischen Batteriegehäuseinnenraum (11) und Umgebung steuerbar und/ oder regelbar ist.

4. Vorrichtung (20) zur Minderung der Feuchtigkeit eines Gases in einem Batteriegehäuseinnenraum (11) nach Anspruch 3, **dadurch gekennzeichnet, dass** wenigstens eine der Membranen (24, 26) als Filtermaterial Polytetrafluorethylen umfasst.

5. Vorrichtung (20) zur Minderung der Feuchtigkeit eines Gases in einem Batteriegehäuseinnenraum (11) nach wenigstens einem der Ansprüche 3 oder 4, **dadurch gekennzeichnet, dass** die Kühleinrichtung (27) wenigstens ein Peltier-Element umfasst.

6. Vorrichtung (20) zur Minderung der Feuchtigkeit eines Gases in einem Batteriegehäuseinnenraum (11) nach wenigstens einem der Ansprüche 3 bis 5, **dadurch gekennzeichnet, dass** am Zwischenraum (21) zwischen den Membranen (24, 26) wenigstens eine Ablaufleitung (28) zur Ableitung des bei der Kühlung entstandenen Kondenswassers angeordnet ist.

7. Vorrichtung (20) zur Minderung der Feuchtigkeit eines Gases in einem Batteriegehäuseinnenraum (11) nach Anspruch 6, **dadurch gekennzeichnet, dass** in der Ablaufleitung (28) ein Rückschlagventil angeordnet ist, mit welchem ein Rückfluss von in der Ablaufleitung (28) befindlicher Flüssigkeit in den Zwischenraum (21) vermeidbar ist.

8. Vorrichtung (20) zur Minderung der Feuchtigkeit eines Gases in einem Batteriegehäuseinnenraum (11) nach wenigstens einem der Ansprüche 3, 4, 6 und 7, **dadurch gekennzeichnet, dass** die Kühleinrichtung (27) ein Bypass eines Kühlsystems zur Kühlung einer Batterie im Batteriegehäuseinnenraum (11) ist.

9. Vorrichtung (20) zur Minderung der Feuchtigkeit eines Gases in einem Batteriegehäuseinnenraum (11) nach wenigstens einem der Ansprüche 3 bis 8, **dadurch gekennzeichnet, dass** die Vorrichtung (20) eine Steuer- und Regelungseinheit aufweist, mit der die Kühlleistung der Kühleinrichtung (27) entsprechend der Feuchtigkeit des durch die erste selektiv permeable Membran (24) geleiteten oder zu leitenden Gases steuerbar und/ oder regelbar ist.

## Claims

1. Method for reducing the humidity of a gas in a battery housing interior, in which method a gas is guided through a first selectively permeable membrane (24) into an intermediate space (21) which has the first selectively permeable membrane (24) as an inlet (23) and a second selectively permeable membrane (26) as an outlet (25), and the gas is subsequently cooled in the intermediate space (21) by means of a cooling device (27) in such a way that a water vapor fraction of the gas is condensed to form water and the gas with a reduced water vapor content is guided through the second selectively permeable membrane (26) into the battery housing interior (11), **characterized in that** the method is carried out when a pressure equalization operation is required between an increased surrounding air pressure and a battery housing interior pressure which is lower than the surrounding air pressure, gas which is dried by the cooling device (27) being introduced into the housing (10) for the purpose of pressure equalization.

2. Method for reducing the humidity of a gas in a battery housing interior (11) according to Claim 1, **characterized in that** the cooling performance of the cooling device (27) is controlled or regulated in accordance with the humidity of the gas which is guided or is to be guided through the first selectively permeable membrane (24) and/or a pressure difference between the battery housing interior (11) and the surroundings.

3. Device (20) for reducing the humidity of a gas in a battery housing interior, **characterized in that** the device (20) comprises an intermediate space (21) which has a first selectively permeable membrane (24) as an inlet (23) and a second selectively permeable membrane (26) as an outlet (25), and in which intermediate space (21) a cooling device (27) is arranged between the membranes (24, 26), by means of which cooling device (27) surrounding air can be cooled in such a way that water can be produced as condensation liquid and gas with a reduced water vapor fraction can be produced, the first (24) and the second selectively permeable membranes (26) being permeable for gases in each case and at least the second selectively permeable membrane (26) being impermeable for liquids, in particular water, **characterized in that** the device (20) has a control and regulating unit, by way of which the cooling performance of the cooling device (27) can be controlled and/or can be regulated in accordance with a pressure difference between the battery housing interior (11) and the surroundings.

4. Device (20) for reducing the humidity of a gas in a battery housing interior (11) according to Claim 3, **characterized in that** at least one of the membranes (24, 26) comprises polytetrafluoroethylene as filter material.

5. Device (20) for reducing the humidity of a gas in a battery housing interior (11) according to at least one of Claims 3 or 4, **characterized in that** the cooling device (27) comprises at least one Peltier element.

6. Device (20) for reducing the humidity of a gas in a battery housing interior (11) according to at least one of Claims 3 to 5, **characterized in that** at least one outlet line (28) is arranged at the intermediate space (21) between the membranes (24, 26), for discharging the condensation water which is produced during the cooling.

7. Device (20) for reducing the humidity of a gas in a battery housing interior (11) according to Claim 6, **characterized in that** a nonreturn valve is arranged in the outlet line (28), by way of which nonreturn valve a return flow of liquid which is situated in the outlet line (28) into the intermediate space (21) can be avoided.

8. Device (20) for reducing the humidity of a gas in a battery housing interior (11) according to at least one of Claims 3, 4, 6 and 7, **characterized in that** the cooling device (27) is a bypass of a cooling system for cooling a battery in the battery housing interior (11).

9. Device (20) for reducing the humidity of a gas in a battery housing interior (11) according to at least one of Claims 3 to 8, **characterized in that** the device (20) has a control and regulating unit, by way of which the cooling performance of the cooling device (27) can be controlled and/or can be regulated in accordance with the humidity of the gas which is guided or is to be guided through the first selectively permeable membrane (24).

## Revendications

1. Procédé de réduction de l'humidité d'un gaz à l'intérieur du boîtier d'une batterie, dans lequel un gaz est guidé à travers une première membrane (24) à perméabilité sélective dans un espace intermédiaire (21), lequel présente en tant qu'entrée (23) la première membrane (24) à perméabilité sélective et en tant que sortie (25) une deuxième membrane (26) à perméabilité sélective, et le gaz est ensuite refroidi au moyen d'un dispositif de refroidissement (27) dans l'espace intermédiaire (21) de telle sorte qu'une proportion de vapeur d'eau du gaz se condense pour former de l'eau et le gaz est guidé avec une teneur en vapeur d'eau réduite à travers la deuxième membrane (26) à perméabilité sélective jusque dans l'intérieur du boîtier de batterie (11), **caractérisé en ce que** le procédé est mis en oeuvre lorsqu'un équilibrage de pression est nécessaire entre une pression accrue de l'air ambiant et une pression plus faible à l'intérieur du boîtier de batterie par rapport à la pression de l'air ambiant, du gaz déshydraté par le dispositif de refroidissement (27) étant introduit dans le boîtier (10) en vue d'équilibrer la pression.

2. Procédé de réduction de l'humidité d'un gaz à l'intérieur du boîtier d'une batterie (11) selon la revendication 1, **caractérisé en ce que** la puissance de refroidissement du dispositif de refroidissement (27) est commandée ou régulée en fonction de l'humidité du gaz guidé ou devant être guidé à travers la première membrane (24) à perméabilité sélective et/ou en fonction d'une différence de pression entre l'intérieur du boîtier de batterie (11) et l'environnement.

3. Dispositif (20) de réduction de l'humidité d'un gaz à l'intérieur du boîtier d'une batterie, **caractérisé en ce que** le dispositif (20) comprend un espace intermédiaire (21) qui présente en tant qu'entrée (23) une première membrane (24) à perméabilité sélective et en tant que sortie (25) une deuxième membrane (26) à perméabilité sélective, et un dispositif de refroidissement (27) est disposé entre les membranes (24, 26), au moyen duquel l'air ambiant peut être refroidi de telle sorte que l'on puisse obtenir de l'eau en tant que liquide de condensation et du gaz avec une proportion de vapeur d'eau réduite, la première (24) et la deuxième (26) membrane à perméabilité sélective étant perméables aux gaz et au moins la deuxième membrane (26) à perméabilité sélective n'étant pas perméable aux liquides, en particulier à l'eau, **caractérisé en ce que** le dispositif (20) présente une unité de commande et de régulation avec laquelle la puissance de refroidissement du dispositif de refroidissement (27) peut être commandée et/ou régulée en fonction d'une différence de pression entre l'intérieur du boîtier de batterie (11) et l'environnement.

4. Dispositif (20) de réduction de l'humidité d'un gaz à l'intérieur du boîtier d'une batterie (11) selon la revendication 3, **caractérisé en ce qu'**au moins l'une des membranes (24, 26) comprend en tant que matériau filtrant du polytétrafluoréthylène.

5. Dispositif (20) de réduction de l'humidité d'un gaz à l'intérieur du boîtier d'une batterie (11) selon au moins l'une quelconque des revendications 3 ou 4, **caractérisé en ce que** le dispositif de refroidissement (27) comprend au moins un élément Peltier.

6. Dispositif (20) de réduction de l'humidité d'un gaz à l'intérieur du boîtier d'une batterie (11) selon au moins l'une quelconque des revendications 3 à 5, **caractérisé en ce qu'**au moins une conduite d'écoulement (28) pour l'écoulement de l'eau de condensation produite lors du refroidissement est disposée au niveau de l'espace intermédiaire (21) entre les membranes (24, 26).

7. Dispositif (20) de réduction de l'humidité d'un gaz à l'intérieur du boîtier d'une batterie (11) selon la revendication 6, **caractérisé en ce que** dans la conduite d'écoulement (28) est disposé un clapet anti-retour avec lequel on peut éviter un retour du liquide se trouvant dans la conduite d'écoulement (28) dans l'espace intermédiaire (21).

8. Dispositif (20) de réduction de l'humidité d'un gaz à l'intérieur du boîtier d'une batterie (11) selon au moins l'une quelconque des revendications 3, 4, 6 et 7, **caractérisé en ce que** le dispositif de refroidissement (27) est une dérivation d'un système de refroidissement pour le refroidissement d'une batterie dans l'intérieur du boîtier de batterie (11).

9. Dispositif (20) de réduction de l'humidité d'un gaz à l'intérieur du boîtier d'une batterie (11) selon au moins l'une quelconque des revendications 3 à 8, **caractérisé en ce que** le dispositif (20) présente une unité de commande et de régulation, avec laquelle la puissance de refroidissement du dispositif de refroidissement (27) peut être commandée et/ou régulée en fonction de l'humidité du gaz guidé ou devant être guidé à travers la première membrane (24) à perméabilité sélective.
